# EUROPÄISCHE PATENTSCHRIFT

(11) **EP 0 800 220 B1**
(45) Veröffentlichungstag und Bekanntmachung des Hinweises auf die Patenterteilung: **24.01.2001**
(21) Anmeldenummer: 97104918.4
(22) Anmeldetag: 22.03.1997
(51) Int. Cl.: H01L 41/09

(54) **Hochdynamischer piezoelektrischer Antrieb**
Fast responce piezoelectric actuator
Organe d'actionnement piézo-électrique à réponse rapide

(30) Priorität: 02.04.1996 DE 19613158
(43) Veröffentlichungstag der Anmeldung: 08.10.1997
(73) Patentinhaber: MDC Max Dätwyler Bleienbach AG, CH-3368 Bleienbach (CH)
(72) Erfinder: Reuter, Martin, 85221 Dachau (DE)
(74) Vertreter: Patentanwälte Schaad, Balass, Menzl & Partner AG

(56) Entgegenhaltungen:
- EP-A- 0 345 920
- PATENT ABSTRACTS OF JAPAN vol. 013, no. 351 (P-912), 7.August 1989 & JP 01 109536 A (FUJITSU LTD), 26.April 1989,
- PATENT ABSTRACTS OF JAPAN vol. 010, no. 027 (E-378), 4.Februar 1986 & JP 60 187270 A (NIPPON DENSHIN DENWA KOSHA), 24.September 1985,

## Beschreibung

Die Erfindung betrifft einen hochdynamischen piezoelektrischen Antrieb, der überall dort zur Anwendung gelangt, wo hohe Anforderungen an die Resonanzfrequenz, die Positionierzeit, die Stellgeschwindigkeit oder Beschleunigung eines piezoelektrischen Antriebssystems erforderlich sind. Bevorzugte Anwendungsgebiete der Erfindung sind z.B.:
- Antriebe für Werkzeuge zur mechanischen Gravur von Druckwalzen,
- Positioniereinrichtungen zum Oberflächenscanning in einer Ebene,
- Kippspiegel, die in einem Stellbereich von 1 - 2° Positionierzeiten im Sub-ms-Bereich erfordern und
- Ventilantriebe für einen hochdynamischen Schalt- und Proportionalbetrieb.

Piezoelektrische Antriebs- und Verstellelemente sind bereits bekannt. Als einfachste Bauform kann dabei ein piezoelektrisches Element sich einerseits an einer ruhenden Auflage abstützen und andererseits gegen ein verstellbares Bauelement drücken. Bei Anlegen einer elektrischen Spannung an das piezoelektrische Element dehnt sich dieses aus, wodurch das verstellbare Bauelement auslenkbar ist. Bei solchen Aufbauten, die in vielfältigen Ausführungen bekannt sind, wird die relativ geringe Längenänderung eines piezoelektrischen Bauelements, die auch bei aus Einzelelementen aufgebauten Stapeln mit Stapelhöhen in der Größenordnung von 20 mm nicht größer als ca. 20 - 30 µm bei maximal zulässiger Anregungsspannung ist, durch Hebelkonstruktionen entsprechend übersetzt. Eine solche Anordnung ist als Präzisionsantrieb z.B. für Justierarbeiten weit verbreitet (vgl. Firmenkatalog der Fa. Physik Instrumente, Waldbronn [1994]). Der Nachteil solcher Anordnungen, insbesondere im in Vorrichtungen eingebauten Zustand, besteht darin, daß zum einen das piezoelektrische Element stets eine Arbeit gegen die Hebelaufbauten und entsprechende Rückstellmittel zu leisten hat, zum anderen aber auch darin, daß schwankende Kraft- und Temperatureinflüsse Längenveränderungen des Elements selbst bewirken. Insbesondere wirken sich dabei unterschiedliche thermische Ausdehnungskoeffizienten des piezoelektrischen Materials und des Materials der übrigen Vorrichtung, z.B. Stahl, nachteilig aus. Zur Kompensation dieses Effekts muß das Stellelement bei Temperaturänderungen entweder nachjustiert oder aber vermittels eines empfindlichen Positionsmeßsystems automatisch zu Lasten des verfügbaren Stellbereiches nachgeregelt werden. Diese Maßnahmen bedingen jedoch einen z.T. erheblichen zusätzlichen Aufwand.
Weiterhin weisen genannte Bauformen durch die Rückstellmittel eine geringe Eigensteifigkeit auf, so daß sie nur mit geringen Reaktionszeiten quasistatisch arbeiten können.

Zur Behebung der genannten Probleme wurden bereits Piezo-Doppelstapel-Antriebe vorgeschlagen, bei denen zwei identische piezoelektrische Stapel einseitig auf eine Kipphebelanordnung einwirken (F&M, Zeitschrift für Elektronik, Optik und Mikrosystemtechnik, 104. Jg. 1996, S. 70 ff.). Solche Anordnungen führen zu extrem vorgespannten, steifen Aufbauten, die auch ohne Eigenhubverlust gute dynamische Eigenschaften zeigen. Ein weiterer Vorteil besteht in der thermischen Eigenkompensation dieser Systeme. Zur Erzeugung eines hinreichenden Antriebshubes bei ausreichenden Antriebskräften, müssen die zum Einsatz gelangenden Kipphebel jedoch ausreichend stabil konstruiert sein, um die auf sie einwirkenden Biegekräfte aufnehmen zu können. Dies bedingt eine entsprechende Masse der Kipphebel, so daß bei vorgegebenem Hub und einem vorgegebenem Übersetzungsverhältnis für manche Anwendungen nicht mehr ausreichende Resonanzfrequenzen erzielbar sind.

Der Erfindung liegt die Aufgabe zugrunde, einen hochdynamischen piezoelektrischen Antrieb anzugeben, der bei einem vorgegebenen zu erreichenden Hub und einer vorgegebenen zu erreichenden Antriebskraft sehr hohe Resonanzfrequenzen erreicht.

Die Aufgabe der Erfindung wird durch die kennzeichnenden Merkmale des Patentanspruch 1 gelöst. Weitere vorteilhafte Ausgestaltungen sind in den Unteransprüchen enthalten.

Das Wesen der Erfindung besteht darin, daß unter neuartiger Anordnung von wenigstens zwei piezoelektrischen Doppelstapelantrieben und in weiterer Ausbildung der Erfindung einer veränderten Gestaltung der Einzelstapel eine erhöhte Steifigkeit des Antriebs erreicht wird, die in überraschender Weise zu Arbeitsfrequenzen führt, welche erheblich über denen des bekannten Standes der Technik liegen.

Die Erfindung soll nachstehend anhand von Ausführungsbeispielen und zugehöriger schematischer Zeichnungen näher erläutert werden. Es zeigen:
- Fig. 1: einen schematischen Aufbau eines piezoelektrischen Doppelstapelantriebs gemäß dem Stand der Technik in Ansicht,
- Fig. 1a: den Aufbau nach Fig. 1 in Seitenansicht,
- Fig. 2: eine mögliche Ausführungsform eines hochdynamischen Antriebs unter Einsatz von zwei Doppelstapelantrieben gemäß vorliegender Erfindung,
- Fig. 2a: den Aufbau nach Fig. 2 in Seitenansicht,
- Fig. 3: eine vorteilhafte Ausführungsform eines hochdynamischen Antriebs unter Einsatz von zwei Doppelstapelantrieben gemäß vorliegender Erfindung,
- Fig. 3a: den Aufbau nach Fig. 3 in Seitenansicht,
- Fig. 4: eine besonders bevorzugte Ausführungsform eines hochdynamischen Antriebs unter Einsatz von vier Doppelstapelantrieben gemäß vorliegender Erfindung,
- Fig. 4a: den Aufbau nach Fig. 4 in Seitenansicht
- Fig. 4b: eine schematische Variante nach Fig. 4 und
- Fig. 5a bis 5d: Ausbildungen von piezoelektrischen Einzelstapeln, die wahlweise in verschiedenen Varianten vorliegender Erfindung Verwendung finden können.

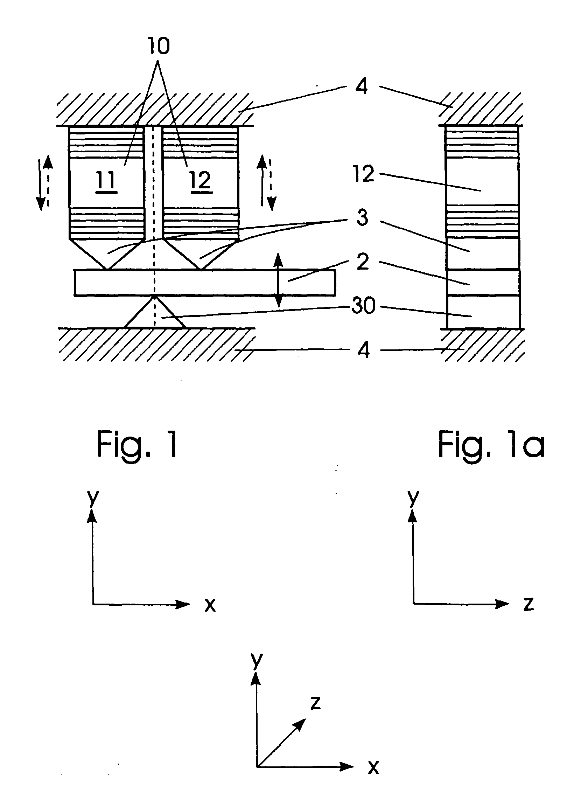

In Figur 1 ist ein Doppelstapelantrieb 10 mit seinen wesentlichen Baugruppen gemäß dem Stand der Technik schematisch in Ansicht dargestellt. Dabei werden unter einer vorgebbaren mechanischen Vorspannung zwei möglichst dicht benachbarte piezoelektrische Einzelstapel 11, 12 einerseits an einer starren Auflage 4 fest anliegend angebunden. An der anderen Seite sind die Einzelstapel über gelenkige Anbindungen 3, die bevorzugt als Festkörpergelenke ausgebildet sind, an einen Kipphebel 2 angelenkt. Der Kipphebel 2 seinerseits ist ebenfalls über ein Festkörpergelenk 30 an eine starre Auflage 4 angebunden. In Realität stellt die starre Anbindung eine in sich geschlossene Aufnahme dar, aus der die auslenkenden Bewegungen des Kipphebels 2 in irgendeiner Form herausgeführt und bspw. zu Ventilsteuerungen genutzt werden. Durch eine gegenphasige elektrische Spannungsbeaufschlagung der piezoelektrischen Stapel 11 und 12 um einen mittleren Offset-Wert wird der eine Stapel zur Ausdehnung veranlaßt, während der andere kontrahiert und umgekehrt. Diese durch Pfeile neben dem Stapel 11 und 12 angedeuteten Bewegungsrichtungen veranlassen den Kipphebel 2 zu Auslenkungen entsprechend des auf ihm dargestellten Doppelpfeils. Wenn im weiteren auf Koordinatenrichtungen Bezug genommen wird, gilt das in Fig. 1 dargestellte kartesische Koordinatenkreuz. Entsprechend der angegebenen Betrachtungsrichtung zeigt Fig. 1a die Fig. 1 in Seitenansicht. Dieser Anordnung nach dem Stand der Technik haften die oben beschriebenen Nachteile an.

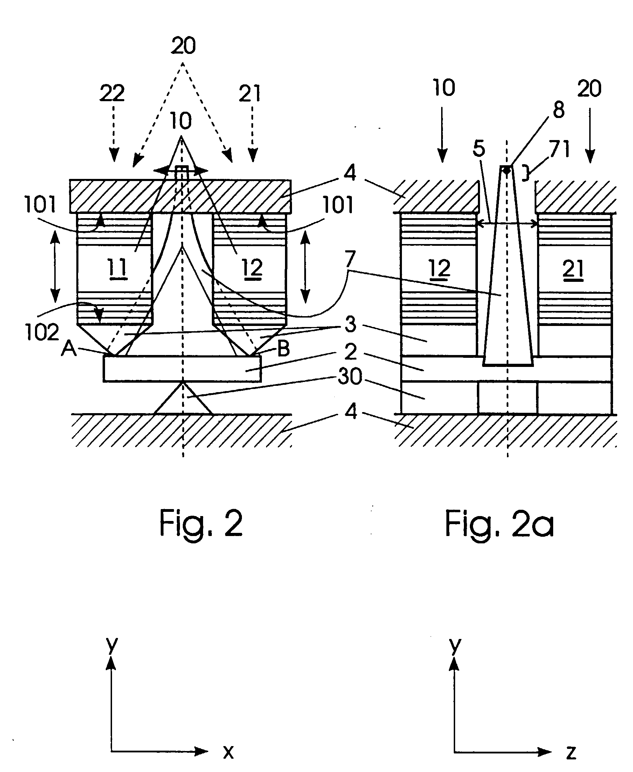

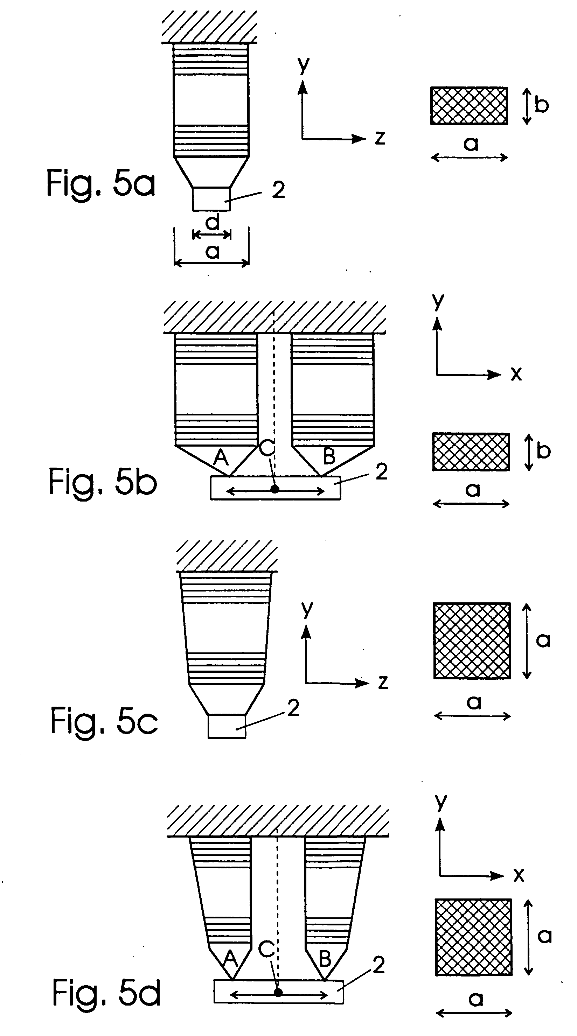

In Figur 2 ist nunmehr eine mögliche Ausführungsform eines hochdynamischen Antriebs unter Einsatz von zwei Doppelstapelantrieben gemäß vorliegender Erfindung dargestellt. Besondere Ausführungsformen hier verwendeter Einzelstapelgeometrien werden unter der Figurenbeschreibung zu Fig. 5 näher erläutert. Dem grundsätzlich bekannten Aufbau eines Doppelstapelantriebs 10, bestehend aus piezoelektrischen Einzelstapeln 11, 12, die einerseits mit ihren ersten Basisflächen 101 an einer starren Auflage 4 und mit ihren zweiten Basisflächen 102 jeweils über gelenkige Anbindungen 3 an einen Kipphebel 2 angreifen, ist deckungsgleich ein zweiter Doppelstapelantrieb 20 zugeordnet, der sich in einem gewissen Abstand, der im weiteren als Zwischenraum 5 bezeichnet wird, vom Doppelstapelantrieb 10 befindet und den Kipphebel 2 in gleicher Weise wie der Doppelstapelantrieb 10 erfaßt. Die Einzelstapel 11 und 12, 21 und 22 werden wie oben beschrieben phasenverschoben mit einer elektrischen Wechselspannung beaufschlagt, wobei die Stapel 11 und 22, 12 und 21 jeweils in gleicher Weise kontrahieren oder expandieren.
Grundsätzlich gilt, daß in die erzielbare Resonanzfrequenz als wesentlich beeinflussende Größen die Systemsteifigkeit und die wirksamen Trägheitskräfte sowohl des Doppelstapelantriebs als auch des Kipphebels sowie zusätzlich angekoppelte äußere Massen, die auf den Kipphebel wirken, ausschlaggebend, und zwar gegenläufig eingehen. Da Verformungen des Kipphebels 2 zu vermeiden sind, kann seine konstruktive Ausgestaltung und damit seine Trägheitsmasse nicht beliebig verkleinert werden. Desweiteren ist zu berücksichtigen, daß eine Erhöhung der Antriebssteifigkeit, wie hier vorgeschlagen, durch die Verwendung von zwei Doppelstapelantrieben 10, 20, zunächst keine Erhöhung der Resonanzfrequenz bewirkt, da die Trägheitskräfte in gleichem Maße steigen. Die erfindungsgemäße Lösung dieses Problems wird im Rahmen der Figurenbeschreibung zu Fig. 5 näher ausgeführt. Anhand von Fig. 2 und 2a soll lediglich die durch den Zwischenraum 5 geschaffene Möglichkeit einer Herausführung der Kipphebelbewegung aus dem System näher ausgeführt werden. Zum einen kann der Kipphebel 2 selbst, durch seine Reduzierung auf eine Länge, die den Abstand der Angriffsfußpunkte A, B der gelenkigen Anbindungen 3 nicht wesentlich übersteigt, erheblich masseärmer ausgebildet werden, da er nur in diesem Bereich biegesteif ausgeführt sein muß. Zum anderen ermöglicht der vorgesehene Zwischenraum 5 zwischen den Doppelstapelantrieben 10 und 20, eine beliebige Herausführung der Kipphebelbewegung durch die Anbringung eines Kipphebelaufsatzes 7, der mit einem Kopfbereich 71 aus dem Antriebssystem herausgeführt, auf weitere Baugruppen einwirken kann, insbesondere jedoch eine Werkzeugaufnahme im Bereich 71 ermöglicht. Der Kipphebelaufsatz 7 ist aus einem Material möglichst geringer Dichte und bevorzugt als dünnwandig profiliertes Teil ausgebildet, welches vorgegebenen Biegewechsel-, Druck- und Scherbeanspruchungen standhält. Dafür besonders geeignet sind hochbelastbare Titanlegierungen oder Kohlefaserverbundwerkstoffe. Desweiteren ist der Kipphebelaufsatz 7 entsprechend der auf ihn einwirkenden äußeren Kräfte und der Trägheitskräfte des Kipphebels 2 bevorzugt so ausgebildet, daß die kipphebelseitige Krafteinleitung des Kipphebelaufsatzes 7 ausschließlich im Bereich der Angriffsfußpunkte A, B der gelenkigen Anbindungen 3 erfolgt, wodurch der Kipphebel 2 nur noch die Vorspannkraft der piezoelektrischen Stapel und die dynamischen Kräfte in den Stapeln aufzunehmen braucht. Ohne den Antrieb zu beeinflussen, kann der Kipphebelaufsatz 7 als in Bewegungsrichtung besonders steifer massearmer Dreiecksstruktur mit einer Basisbreite ausgeführt werden, die im wesentlichen dem Abstand A-B entspricht.
Mit einer Ausführung gemäß Fig. 2 und einzuhaltender Maßnahmen entsprechend der Figurenbeschreibung zu Fig. 5, sind bereits Resonanzfrequenzen bis 7 kHz erreichbar, die damit gegenüber einem ansonsten identischen Antrieb gemäß Fig. 1 um das 1,4fache höher liegen.

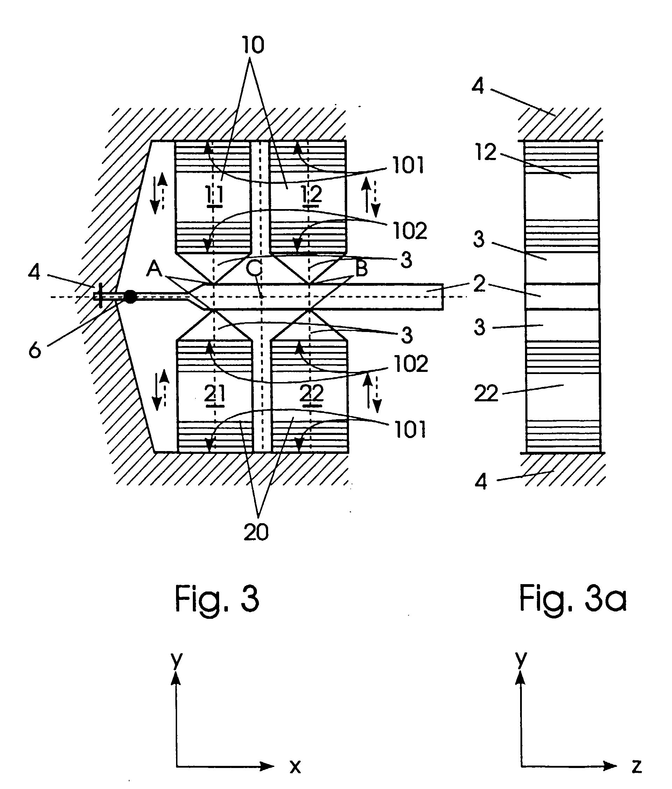

In Figur 3 ist eine vorteilhafte Ausführungsform eines hochdynamischen Antriebs unter Einsatz von zwei Doppelstapelantrieben 10, 20 dargestellt. Bei dieser Ausführungsform sind die Doppelstapel 10, 20 spiegelsymmetrisch einander gegenüberliegend angeordnet. Die Angriffsfußpunkte A, B der piezoelektrischen Stapel 11, 21 und 12, 22 greifen jeweils einander gegenüberliegend an den Kipphebel 2 an. Im Gegensatz zu der Ausführung nach Fig. 2 werden hierbei jedoch die Vorspannkräfte vollständig kompensiert und es ergibt sich auch eine bessere Kompensation der dynamischen Kräfte beim Betrieb der Vorrichtung. Da auf den Kipphebel 2 durch diese Kompensation weit geringere Biegemomente wirken, die im wesentlichen nur noch durch von außen an den Kipphebel angreifende Kräfte bestimmt werden, kann der Kipphebel 2 deutlich dünner ausgeführt werden, was wiederum ein geringeres Hebelträgheitsmoment und damit eine erhöhte Resonanzfrequenz bedingt. Weiterhin weist diese Ausführungsform den Vorteil auf, daß eine geringere Biegedeformation der piezoelektrischen Stapel 11, 12, 21, 22 und geringere Scherbelastungen der gelenkigen Anbindungen 3 zu verzeichnen sind. All diese Vorteile bedingen eine Erhöhung der Lebensdauer der Vorrichtung. Die Fixierung der Lage der Drehachse C des Kipphebels 2 wird in der dargestellten Ausführungsform durch eine einseitige Arretierung erreicht, wobei die Kipphebelbewegung durch eine schematisch angedeutete Biegefeder 6 in z-Richtung gewährleistet wird. Ebenso können in der x-y-Ebene nicht dargestellte Pendelarme mit Gelenken zur Stabilisierung vorgesehen sein. Auch ist es möglich, die hier virtuelle Drehachse C in eine reale Drehachse durch Einbringung eines Torsionsstabes in z-Richtung durch die Drehachse C zu wandeln, was für die bevorzugt angestrebten Verwendungsfälle des Antriebs jedoch weniger in Betracht kommt.
Mit einer Ausführungsform gemäß Fig. 3 lassen sich vergleichbare Resonanzfrequenzen wie nach Fig. 2 erreichen. Die Bewegungsrichtung des in diesem Ausführungsbeispiel dargestellten Antriebs erfolgt vorzugsweise in y-Richtung oder in einem Winkel von ≤ 45° zur y-Achse.

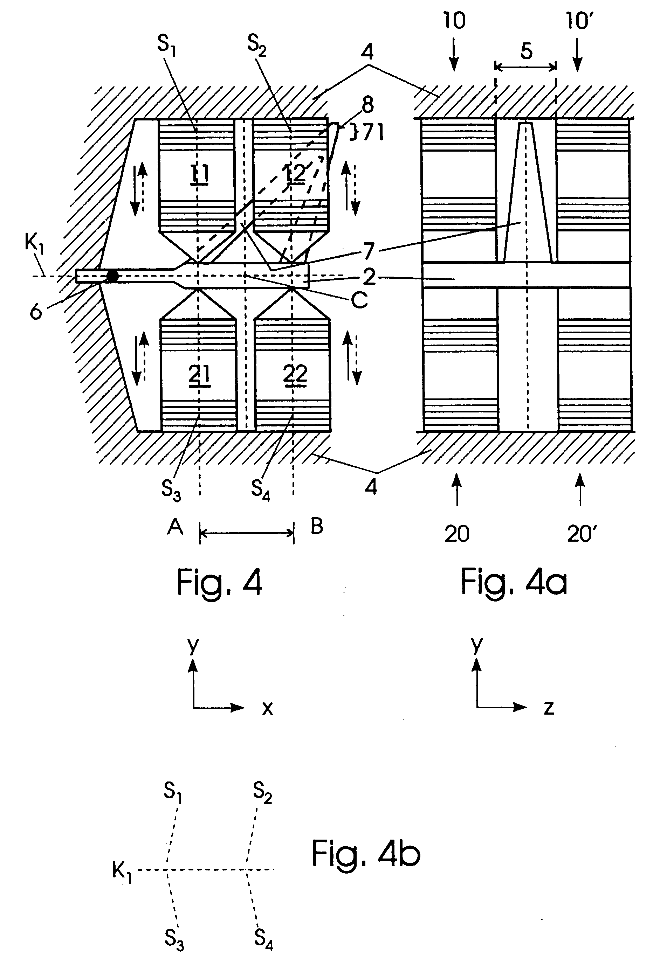

Figur 4 zeigt zunächst eine grundsätzlich gleiche Anordnung wie zu Figur 3 beschrieben. Der zu Fig. 3 bestehende Unterschied wird durch Fig. 4a verdeutlicht. Vergleichbar zu der unter Figur 2 beschriebenen Anordnung sind hier vier Doppelstapelantriebe 10, 10', 20 und 20' vorgesehen. Damit vereint diese Ausbildung der Erfindung die Vorteile der zu Fig. 2 und Fig. 3 beschriebenen Ausführungsmöglichkeiten vollständig. Die dargestellte Herausführung des Kipphebelaufsatzes 7 aus dem Antriebssystem soll hier nur die Wahlfreiheit verdeutlichen und kann selbstverständlich ebenso, wie in Fig. 2 beschrieben erfolgen. Gleiche Baugruppen sind wieder mit gleichen Bezugszeichen versehen.
Eine Ausführungsform der Erfindung gemäß diesem Beispiel erfüllt die besonderen Forderungen an höchste Dynamik bei guter Präzision. Aus diesem Grund eignet sich dieser Antrieb ganz besonders zum Antreiben eines Gravierwerkzeuges zum Gravieren von Tiefdruckzylindern und ähnlichen Druckformen in der grafischen Industrie. Hier sind Flächen in der Größenordnung von einigen Quadratmetern mit Graviernäpfchen einer definierten Größe von 0...200 µm in einem vorgegebenen Bild- oder Schriftmuster zu bearbeiten. In der Figur 4 ist ein am Kipphebelaufsatz 7 dazu befestigter Gravierstichel mit 8 bezeichnet. Während man für diesen Verwendungszweck mit bislang eingesetzten magnetischen Antrieben Arbeitsfrequenzen von etwa 4 kHz erreicht, ermöglicht ein Antrieb gemäß Fig. 4, bei einem statischen Hub von 100 µm, Arbeitsfrequenzen von 8 bis 20 kHz. Ebenso kann vorgesehen sein, daß die Doppelstapel 10, 20 derart auf den Kipphebel 2 eingreifen, daß ihre Achsen S₁, S₂, S₃, S₄, bezogen auf die Kipphebelebene K₁, einen von 90° leicht abweichenden Winkel derart einnehmen, daß beim Betrieb der Doppelstapel von vornherein eine vordefinierte Druckauslenkung in Richtung der Kipphebelarretierung erfolgt, wie es in Figur 4b schematisch angedeutet ist. Diese Maßnahme hat den Vorteil, daß die Arretierung keiner Zug-Druck-Wechselbelastung ausgesetzt ist.

Für alle bis hierher beschriebenen Ausführungsformen gilt, daß der Kipphebel 2 im Rahmen der Erfindung bevorzugt ebenfalls profiliert ausgebildet ausgebildet sein kann, wobei je nach dem konkreten Einsatzfall T-, Doppel-T-Profile oder Hohlprofile beliebigen Querschnitts denkbar sind und insbesondere die Profilgestaltung derart erfolgen kann, daß sie zugleich die Aufnahme des Kipphebelaufsatzes 7 bildet. Eine derartige Möglichkeit ist in Fig. 2a beispielhaft für viele denkbare Aufnehmungen am Beispiel einer schwalbenschwanzförmigen Aufnahme für den Kipphebelaufsatz 7 angedeutet. Neben der damit geschaffenen Möglichkeit eines einfachen Wechsels des Werkzeugträgers ist damit auch die Möglichkeit eines Materialwechsels im Sinne der Erfindung gegeben, da nur noch die hohen mechanischen Belastungen ausgesetzten Baugruppen aus Stahl zu fertigen sind, wohingegen bspw. für den Kipphebelaufsatz massearme Materialien, wie z.B. Al-, Ti-Legierungen, faserarmierte Werkstoffe oder hochbelastbare Keramiken in Betracht kommen.

Zum einen können durch den bisher beschriebenen Einsatz von mehreren Doppelstapelantrieben diese in sich kleiner ausgeführt sein, was bei gleichem Leistungsumsatz eine verbesserte Kühlung durch die Vergrößerung der Gesamtstapeloberfläche bedingt. Zum anderen wird eine weitergehende Verbesserung der Kühlung durch eine besondere Ausbildung der piezoelektrischen Stapel, wie zu Figur 5 beschrieben, erreicht.

Die in den Figuren 5a bis d beschriebenen Stapelausführungen dienen zunächst alle einer Erhöhung der Antriebssteifigkeit und damit der Resonanzfrequenz und gehen aus Vergleichsgründen durchgängig von einem vorgegebenen identischen Abstand A-B der Angriffsfußpunkte der gelenkigen Anbindungen 3 aus, wobei die Darstellungen zur besseren Verdeutlichung der vorgesehenen Einzelmaßnahmen nicht maßstäblich ausgeführt sind.
So zeigt Fig. 5a die Ausbildung eines piezoelektrischen Einzelstapels, der in z-Richtung verbreitert ausgeführt ist, wodurch sich eine rechteckige Stapelquerschnittsfläche ergibt. In z-Richtung ist dabei dem Stapel eine Breite a gegeben, die bezogen auf die Breite d des Kipphebels 2 bis nahezu doppelt so groß ausgeführt sein kann. Durch diese Maßnahme, wie auch durch alle weiteren beschriebenen Abwandlungen, erhöht sich die Antriebssteifigkeit des Systems ca. um den Faktor 2 mit den erfindungsgemäß gewünschten Folgewirkungen. Ebenso erfährt der Antrieb durch die vergrößerte Oberfläche eine verbesserte Kühlung. Eine Ausführung nach Fig. 5a würde sich bei einem Antrieb nach Fig. 3 anbieten.
In Figur 5b ist eine analoge Verbreiterung der Stapel in x-Richtung dargestellt. Bei vorausgesetzter Beibehaltung des Abstandes A - B macht sich in diesem Fall die dargestellte asymmetrische Fußpunktanbindung erforderlich. Die Steigerung der Antriebssteifigkeit durch diese Maßnahme beträgt ca. 1,5. Eine Ausführung nach Fig. 5b würde sich bei einem Antrieb nach Fig. 2 und 4 anbieten.
Ebenso ist eine stetige Verbreiterung der Stapelquerschnittsflächen in Richtung der starren Auflage möglich, so daß unter Berücksichtigung aller wirkenden Kräfte die Spannungen im Stapel annähernd konstant werden. Eine solche Ausbildung ist in Figur 5c am Beispiel einer quadratischen Stapelquerschnittsfläche dargestellt. Die Figur 5d zeigt eine analoge Umsetzung der Vorschrift nach Fig. 5c entsprechend zu Fig. 5b bei wiederum vorausgesetztem konstanten Abstand A - B. Auch diese Maßnahmen bewirken eine Verringerung des Stapelvolumens im Vergleich zu seiner wärmeabstrahlenden Oberfläche und erhöhen somit die Kühlwirkung. Eine Erhöhung der Antriebssteifigkeit wird bis zu einem Faktor 2 erreicht.
Alle in der Beschreibung, den nachfolgenden Ansprüchen und der Zeichnungen dargestellten Merkmale können sowohl einzeln als auch in beliebiger Kombination miteinander erfindungswesentlich sein.

## Patentansprüche

1. Hochdynamischer piezoelektrischer Antrieb, der wenigstens zwei piezoelektrische Doppelstapelantriebe enthält, die Einzelstapel (11, 12, 21, 22) der Doppelstapel (10, 20) mit ihren ersten Basisflächen (101) an einer starren Auflage (4) anliegen und mit ihren zweiten Basisflächen (102) jeweils über eine gelenkige Anbindung (3) an einen gemeinsamen Kipphebel (2) derart angreifen, dass die Angriffsfusspunkte (A, B) jedes Doppelstapels (10, 20) bezüglich einer zwischen diesen Angriffsfusspunkten (A, B) befindlichen Kipphebeldrehachse (C) des Kipphebels 2 einen gleichen Abstand aufweisen, und dass Mittel zur elektrischen Spannungsbeaufschlagung der piezoelektrischen Stapel derart vorgesehen sind, dass die Stapel (11, 12 und 21, 22) eines jeden Doppelstapelantriebs (10, 20) betreibbar sind.

2. Hochdynamischer piezoelektrischer Antrieb nach Anspruch 1, dadurch gekennzeichnet, dass die Doppelstapel (10, 20) spiegelsymmetrisch mit ihren Wirkrichtungen einander gegenüberliegend angeordnet sind.

3. Hochdynamischer piezoelektrischer Antrieb nach Anspruch 1 oder 2, dadurch gekennzeichnet, dass paarweise hintereinanderliegend jeweils zwei Doppelstapelantriebe vorgesehen sind, die an den Kipphebel (2) derart angreifen, dass zumindest zwischen zwei gleichwirkenden Doppelstapeln (10 oder 20) ein Zwischenraum (5) verbleibt.

4. Hochdynamischer piezoelektrischer Antrieb nach einem der Ansprüche 1 bis 3, dadurch gekennzeichnet, dass Mittel (6) zur Lagefixierung der Kipphebeldrehachse (C) vorgesehen sind.

5. Hochdynamischer piezoelektrischer Antrieb nach Anspruch 4, dadurch gekennzeichnet, dass die Mittel (6) zur Lagefixierung der Kipphebeldrehachse (C) durch abseits der Kipphebeldrehachse (C) angeordnete und mit einer Wandung der starren Auflage (4) in Verbindung stehende Baugruppen, wie einer Biegefeder oder Pendelarme, gebildet sind.

6. Hochdynamischer piezoelektrischer Antrieb nach Anspruch 4, dadurch gekennzeichnet, daß die Mittel (6) zur Lagefixierung der Kipphebeldrehachse (C) durch in die Kipphebeldrehachse (C) verlegte und mit einer Wandung der starren Auflage (4) in Verbindung stehende Baugruppen, wie einem Torsionsstab oder Achseallager, gebildet sind.

7. Hochdynamischer piezoelektrischer Antrieb nach Anspruch 3, dadurch gekennzeichnet, daß der Kipphebel (2) in einer Länge biegesteif ausgeführt ist, die den lateralen Abstand der Angriffsfußpunkte (A, B) der gelenkigen Anbindungen (3) nur unwesentlich übersteigt.

8. Hochdynamischer piezoelektrischer Antrieb nach Anspruch 3 und 7, dadurch gekennzeichnet, daß im Bereich des Zwischenraums (5) ein Kipphebelaufsatz (7) vorgesehen ist, der in beliebig vorgebbaren Bereichen zwischen zwei Doppelstapeln (10, 20) herausgeführt ist.

9. Hochdynamischer piezoelektrischer Antrieb nach Anspruch 8, dadurch gekennzeichnet, daß der Kipphebelaufsatz (7) aus einem Material möglichst geringer Dichte und bevorzugt als dünnwandig profiliertes Teil ausgebildet ist, welches vorgegebenen Biegewechsel-, Druck- und Scherbeanspruchungen standhält.

10. Hochdynamischer piezoelektrischer Antrieb nach Anspruch 8 oder 9, dadurch gekennzeichnet, daß der Kipphebelaufsatz (7) entsprechend der auf ihn einwirkenden äußeren Kräfte und der Trägheitskräfte des Kipphebels (2) so gestaltet ist, daß die kipphebelseitige Krafteinleitung des Kipphebelaufsatzes (7) im wesentlichen im Bereich der Angriffsfußpunkte (A, B) der gelenkigen Anbindungen (3) erfolgt.

11. Hochdynamischer piezoelektrischer Antrieb nach einem der Ansprüche 8 bis 10, dadurch gekennzeichnet, daß der Kipphebelaufsatz (7) in seinem Kopfbereich (71) ein Werkzeug (8) trägt.

12. Hochdynamischer piezoelektrischer Antrieb nach einem der Ansprüche 8 bis 11, dadurch gekennzeichnet, daß der Kipphebelaufsatz (7) als auswechselbare Baugruppe ausgebildet ist.

13. Hochdynamischer piezoelektrischer Antrieb nach Anspruch 12, dadurch gekennzeichnet, daß der Kipphebel (2) als profiliertes Teil ausgebildet ist, dessen Profilgebung der Aufnahme des im Basisbereich entsprechend komplementär gestalteten Kipphebelaufsatzes (7) dient.

14. Hochdynamischer piezoelektrischer Antrieb nach Anspruch 12, dadurch gekennzeichnet, daß der Kipphebelaufsatz (7) zwischen den Doppelstapeln verklemmt angeordnet ist.

15. Hochdynamischer piezoelektrischer Antrieb nach einem der Ansprüche 1 bis 3, dadurch gekennzeichnet, daß den Einzelstapeln (11, 12, 21, 22) in ihren Basisflächen (101, 102) ein rechteckiger Querschnitt gegeben ist.

16. Hochdynamischer piezoelektrischer Antrieb nach einem der Ansprüche 1 bis 3 oder 15, dadurch gekennzeichnet, daß den Einzelstapeln (11, 12, 21, 22) beginnend von ihren ersten Basisflächen (101) in Richtung der zweiten Basisflächen (102) ein stetig abnehmender Querschnitt gegeben ist.

17. Hochdynamischer piezoelektrischer Antrieb nach einem der vorstehenden Ansprüche, dadurch gekennzeichnet, daß die Doppelstapel (10, 20) derart auf den Kipphebel (2) eingreifen, daß ihre Achsen (S₁, S₂, S₃, S₄), bezogen auf die Kipphebelebene (K₁), einen von 90° leicht abweichenden Winkel einnehmen.

18. Verwendung eines hochdynamischen piezoelektrischen Antriebes nach einem der vorstehenden Ansprüche 1 bis 17 zum Antreiben eines Gravierwerkzeuges (8) zum Gravieren von Druckformen, insbesondere Tiefdruckzylindern.

## Claims

1. Highly dynamic piezo-electric drive which contains at least two piezo-electric double stack drives, the first base surfaces (101) of the individual stacks (11, 12, 21, 22) of the double stacks (10, 20) rest on a rigid mount (4) and the second base surfaces (102) of which act, in each case via a jointed link (3), on a common toggle lever (2) in such a manner that the base points of action (A, B) of each double stack (10, 20) are at the same distance from the toggle lever axis of rotation (C) of the toggle lever (2) located between these base points of action (A, B), and in that means are provided for applying electrical voltage to the piezo-electric stacks, in such a manner that the stacks (11, 12 and 21, 22) of each double stack drive (10, 20) can be operated.

2. Highly dynamic piezo-electric drive according to Claim 1, characterized in that the double stacks (10, 20) are arranged in mirror-image symmetry with their directions of action opposite to one another.

3. Highly dynamic piezo-electric drive according to Claim 1 or 2, characterized in that two double stack drives are in each case provided in pairs located one behind the other, which double stack drives act on the toggle lever (2) in such a manner that an intermediate space (5) remains at least between two double stacks (10 or 20) which have the same action.

4. Highly dynamic piezo-electric drive according to one of Claims 1 to 3, characterized in that means (6) are provided for fixing the position of the toggle lever axis of rotation (C).

5. Highly dynamic piezo-electric drive according to Claim 4, characterized in that the means (6) for fixing the position of the toggle lever axis of rotation (C) are formed by assemblies which are arranged away from the toggle lever axis of rotation (C) and are connected to a wall of the rigid mount (4), such as a bending spring or pendulum arms.

6. Highly dynamic piezo-electric drive according to Claim 4, characterized in that the means (6) for fixing the position of the toggle lever axis of rotation (C) are formed by assemblies which are moved to the toggle lever axis of rotation (C) and are connected to a wall of the rigid mount (4), such as a torsion rod or axial bearing.

7. Highly dynamic piezo-electric drive according to Claim 3, characterized in that the toggle lever (2) is designed to be inflexible over a length which only insignificantly exceeds the lateral distance between the base points of action (A, B) of the jointed links (3).

8. Highly dynamic piezo-electric drive according to Claim [sic] 3 and 7, characterized in that a toggle lever attachment (7) is provided in the region of the intermediate space (5) and is passed out between two double stacks (10, 20) in regions which can be predetermined as required.

9. Highly dynamic piezo-electric drive according to Claim 8, characterized in that the toggle lever attachment (7) is formed from a material having as low a density as possible and preferably as a part which has a thin-walled profile and withstands predetermined alternating bending, compression and shear stresses.

10. Highly dynamic piezo-electric drive according to Claim 8 or 9, characterized in that the toggle lever attachment (7) is designed in accordance with the external forces acting on it and the inertia forces of the toggle lever (2) such that the application of force to the toggle lever attachment (7) on the toggle lever side essentially takes place in the region of the base points of action (A, B) of the jointed links (3).

11. Highly dynamic piezo-electric drive according to one of Claims 8 to 10, characterized in that the toggle lever attachment (7) is fitted with a tool (8) in its head region (71).

12. Highly dynamic piezo-electric drive according to one of Claims 8 to 11, characterized in that the toggle lever attachment (7) is designed as a replaceable assembly.

13. Highly dynamic piezo-electric drive according to Claim 12, characterized in that the toggle lever (2) is designed as a profiled part whose profiling is used to hold the toggle lever attachment (7), which is designed in a correspondingly complementary manner in the base region.

14. Highly dynamic piezo-electric drive according to Claim 12, characterized in that the toggle lever attachment (7) is arranged such that it is clamped between the double stacks.

15. Highly dynamic piezo-electric drive according to one of Claims 1 to 3, characterized in that the individual stacks (11, 12, 21, 22) are given a rectangular cross-section on their base surfaces (101, 102).

16. Highly dynamic piezo-electric drive according to one of Claims 1 to 3 or 15, characterized in that the individual stacks (11, 12, 21, 22) are given a continuously reducing cross-section, starting from their first base surfaces (101), in the direction of the second base surfaces (102).

17. Highly dynamic piezo-electric drive according to one of the preceding claims, characterized in that the double stacks (10, 20) act on the toggle lever (2) in such a manner that their axes (S₁, S₂, S₃, S₄), related to the toggle lever plane (K₁), assume an angle which differs slightly from 90°.

18. Use of a highly dynamic piezo-electric drive according to one of the preceding claims 1 to 17 for driving an engraving tool (8) for engraving print forms, in particular gravure printing cylinders.

## Revendications

1. Entraînement piézo-électrique hautement dynamique comprenant au moins deux entraînements piézo-électriques à double empilage, les empilages individuels (11, 12, 21, 22) des doubles empilages (10, 20) étant adjacents avec leurs premières faces basales (101) à un support rigide (4) et s'appliquant avec leurs secondes faces basales (102), chacun par l'intermédiaire d'une liaison articulée (3), sur un levier oscillant commun (2), de telle manière que les points d'attaque (A, B) de chaque double empilage (10, 20) présentent un même écartement par rapport à un axe de rotation (C) du levier oscillant (2) situé entre ces points d'attaque (A, B) et que des dispositifs servant à alimenter en tension électrique les empilages piézo-électriques sont prévus de manière que les empilages (11, 12 et 21, 22) de chaque entraînement à double empilage (10, 20) peuvent être actionnés.

2. Entraînement piézo-électrique hautement dynamique selon la revendication 1, caractérisé en ce que les doubles empilages (10, 20) sont disposés de façon symétrique en miroir avec leurs sens d'action opposés l'un à l'autre.

3. Entraînement piézo-électrique hautement dynamique selon la revendication 1 ou 2, caractérisé en ce qu'à chaque fois deux entraînements à double empilage sont prévus par paire disposés l'un derrière l'autre, lesquels s'appliquent contre le levier oscillant (2) de telle manière qu'au moins entre deux doubles empilages (10 ou 20) concurrents il reste un intervalle (5).

4. Entraînement piézo-électrique hautement dynamique selon l'une des revendications 1 à 3, caractérisé en ce que des dispositifs (6) sont prévus pour fixer l'axe de rotation de levier oscillant (C) en position.

5. Entraînement piézo-électrique hautement dynamique selon la revendication 4, caractérisé en ce que les dispositifs (6) destinés à fixer l'axe de rotation de levier oscillant (C) en position sont formés par des éléments, tels qu'un ressort spiral ou des bras oscillants, disposés à l'écart de l'axe de rotation de levier oscillant (C) et reliés à une paroi du support rigide (4).

6. Entraînement piézo-électrique hautement dynamique selon la revendication 4, caractérisé en ce que les dispositifs (6) destinés à fixer l'axe de rotation de levier oscillant (C) en position sont formés par des éléments, comme une barre de torsion ou un palier d'axe, posés dans l'axe de rotation de levier oscillant (C) et reliés à une paroi du support rigide (4).

7. Entraînement piézo-électrique hautement dynamique selon la revendication 3, caractérisé en ce que le levier oscillant (2) est réalisé résistant à la flexion dans une longueur qui ne dépasse l'écartement latéral des points d'attaque (A, B) des liaisons articulées (3) que de manière insignifiante.

8. Entraînement piézo-électrique hautement dynamique selon les revendications 3 et 7, caractérisé en ce que, dans la zone de l'intervalle (5), il est prévu un élément rapporté de levier oscillant (7) qui est sorti dans des zones pouvant être prédéterminées au choix entre deux empilages doubles (10, 20).

9. Entraînement piézo-électrique hautement dynamique selon la revendication 8, caractérisé en ce que l'élément rapporté de levier oscillant (7) est réalisé dans un matériau dont la densité est aussi faible que possible et de préférence sous la forme d'une pièce profilée à paroi mince, laquelle résiste aux sollicitations à la flexion alternée, à la pression et au cisaillement prédéterminées.

10. Entraînement piézo-électrique hautement dynamique selon la revendication 8 ou 9, caractérisé en ce que l'élément rapporté de levier oscillant (7), conformément aux forces extérieures qui lui sont appliquées et aux forces d'inertie du levier oscillant (2), est réalisé de telle manière que l'application de la force côté levier oscillant de l'élément rapporté de levier oscillant (7) ait lieu essentiellement dans la zone des points d'attaque (A, B) des liaisons articulées (3).

11. Entraînement piézo-électrique hautement dynamique selon l'une des revendications 8 à 10, caractérisé en ce que l'élément rapporté de levier oscillant (7) porte un outil (8) dans la zone de sa tête (71).

12. Entraînement piézo-électrique hautement dynamique selon l'une des revendications 8 à 11, caractérisé en ce que l'élément rapporté de levier oscillant (7) est réalisé sous la forme d'un élément interchangeable.

13. Entraînement piézo-électrique hautement dynamique selon la revendication 12, caractérisé en ce que le levier oscillant (2) est réalisé sous la forme d'une pièce profilée dont le profil sert à recevoir l'élément rapporté de levier oscillant (7) conçu à cet effet de façon complémentaire dans sa partie basale.

14. Entraînement piézo-électrique hautement dynamique selon la revendication 12, caractérisé en ce que l'élément rapporté de levier oscillant (7) est disposé et bloqué entre les empilages doubles.

15. Entraînement piézo-électrique hautement dynamique selon l'une des revendications 1 à 3, caractérisé en ce que les empilages individuels (11, 12, 21, 22) ont une section transversale rectangulaire au niveau de leurs faces basales (101, 102).

16. Entraînement piézo-électrique hautement dynamique selon l'une des revendications 1 à 3 ou 15, caractérisé en ce que les empilages individuels (11, 12, 21, 22) ont une section transversale qui diminue constamment à partir de leurs premières faces basales (101) vers leurs secondes faces basales (102).

17. Entraînement piézo-électrique hautement dynamique selon l'une des revendications précédentes, caractérisé en ce que les empilages doubles (10, 20) s'appliquent sur le levier oscillant (2) de telle manière que leurs axes (S₁, S₂, S₃, S₄), rapportés au plan de levier oscillant (K₁), forment un angle s'écartant légèrement de l'angle droit.

18. Utilisation d'un entraînement piézo-électrique hautement dynamique selon l'une des revendications précédentes de 1 à 17 pour entraîner un outil de gravure (8) servant à graver des formes d'impression, et notamment des cylindres d'héliogravure.
